Europäisches Patentamt

European Patent Office

Office européen des brevets

(11) Veröffentlichungsnummer: **0 094 371**
A2

# (12) EUROPÄISCHE PATENTANMELDUNG

(21) Anmeldenummer: 83890058.7

(22) Anmeldetag: 19.04.83

(51) Int. Cl.³: **B 23 P 13/00**
// B24C5/06

(30) Priorität: 26.04.82 AT 1608/82

(43) Veröffentlichungstag der Anmeldung: 16.11.83
Patentblatt 83/46

(84) Benannte Vertragsstaaten: BE CH DE FR GB IT LI LU NL SE

(71) Anmelder: VEREINIGTE EDELSTAHLWERKE AKTIENGESELLSCHAFT (VEW), Elisabethstrasse 12, A-1010 Wien (AT)

(72) Erfinder: Illmaier, Herbert, Quergasse 2, A-8605 Kapfenberg (AT)

(74) Vertreter: Widtmann, Georg, Dr., Vereinigte Edelstahlwerke Aktiengesellschaft (VEW) Elisabethstrasse 12, A-1010 Wien (AT)

(54) Verfahren zur Herstellung gehärteter Wurfschaufeln für Fliehkraft-Strahlvorrichtungen.

(57) Um die Verschleissteile darstellenden und daher in grosser Zahl benötigten gehärteten Wurfschaufeln für Fliehkraft-Strahlvorrichtungen einfacher und rationeller herstellen zu können und eine Standzeitverbesserung der Schaufeln zu erzielen, wird ein neues Herstellungsverfahren vorgeschlagen, bei dem ein dem Schaufelprofil nachgebildeter Profilwalzstahl hergestellt, im wesentlichen auf das Schaufelmass abgelängt, erforderlichenfalls der Halterung dienende Ausnehmungen eingearbeitet und durch eine Wärmebehandlung eine Härteeinstellung auf 60 - 68 $HR_c$, vorzugsweise 61 - 66 $HR_c$, vorgenommen wird.

- 1 -

## Verfahren zur Herstellung gehärteter Wurfschaufeln für Fliehkraft-Strahlvorrichtungen

Die Erfindung betrifft ein Verfahren zur Herstellung gehärteter Wurfschaufeln für Fliehkraft-Strahlvorrichtungen.

Solche Strahlvorrichtungen sind im Rahmen der Strahlverfahrenstechnik in großer Zahl beispielsweise zum Gußputzen (Entfernung des anhaftenden Form- bzw. Kernsandes von Metallgußteilen), zum Entzundern, zum Polierstrahlen sowie für eine ganze Reihe weiterer Anwendungsfälle im Einsatz.

Wenngleich die Vorrichtungsdetails bei den verschiedenen Herstellerfirmen voneinander oft abweichen, ist doch das Grundprinzip jeweils dasselbe, nämlich ein oder mehrere rasch rotierende, mit sogenannten Wurfschaufeln ausgestattete Schleuderräder, um aus dem kontinuierlich zugeführten körnigen Strahlmittel mittels der Fliehkraftwirkung einen auf die zu bearbeitenden Gegenstände gerichteten Schleuderstrahl zu bilden. Die dabei verwendeten, häufig scharfkantig ausgebildeten Strahlmittel, wie z.B. Stahlguß- bzw. Hartgußschrot und -kies, Draht- bzw. Blechkorn u. dgl. bewirken trotz der Anwendung besonders abriebfester und widerstandsfähiger Legierungen als Schaufelmaterial eine hohe und überdies ungleichmäßige Abnützung der Wurfschaufeln. Die Herstellung der Wurfschaufeln erfolgte nämlich bisher durch Gießen und dabei treten unvermeidlich, etwa auf Grund örtlich unterschiedlicher Erstarrungsbedingungen der Schmelze oder anderer Einflüsse, Unterschiede hinsichtlich des Gefüges, der Härte bzw. Oberflächenbeschaffenheit auf, die sich auch auf den Verschleiß erheblich auswirken. Deshalb sind es nicht bloß die eingetretenen Materialabtragungen, sondern auch Unwuchterscheinungen, die durch eine örtlich unterschiedliche Auskolkung der Schaufeloberflächen bedingt sind und zu einem stark erhöhten Lagerverschleiß der Maschinen führen würden, die einen häufigen Austausch der Wurfschaufeln erforderlich machen. Die Wurfschaufeln stellen demnach in großer Zahl benötigte Verschleißteile für die Schleuderstrahlvorrichtungen dar und es erscheint einleuchtend, daß nicht zuletzt auch der Aufwand für die Austausch-Manipulationen sowie die Stillstandszeiten der Maschinen von größter Bedeutung sind, wenn es um die Aufgabe geht, eine Standzeitverbesserung der Schaufeln zu erzielen und eine vereinfachte und kostengünstigere Herstellungsart zu erreichen.

Das erfindungsgemäße Verfahren löst diese Aufgabe in überraschend einfacher Weise und ist dadurch gekennzeichnet, daß ein dem Schaufelprofil nachgebildeter Profilwalzstahl hergestellt, im wesentlichen auf das Schaufelmaß abgelängt, erforderlichenfalls der Halterung dienende Ausnehmungen eingearbeitet und durch eine Wärmebehandlung eine Härteeinstellung auf 60 bis 68 $HR_c$, vorzugsweise 61 bis 66 $HR_c$, vorgenommen wird.

Als Profilwalzstahl wird dabei vorzugsweise ein ledeburitischer Werkzeugstahl, insbesondere ein solcher aus der Reihe der ledeburitischen Chromstähle verwendet.

Wie sich bei Vergleichsversuchen mit erfindungsgemäß hergestellten Wurfschaufeln gezeigt hat, tritt gegenüber gegossenen Schaufeln aus dem entsprechenden Werkstofftyp eine Standzeiterhöhung zwischen 30 bis 50 % auf. Eine Erklärung für dieses Phänomen könnte darin liegen, daß der gleichmäßige Verformungsgrad des Walzmaterials dazu führt, daß gegenüber den Gußschaufeln Gefüge, Oberflächenhärte und -beschaffenheit wesentlich gleichmäßiger ausgebildet sind, doch muß betont werden, daß insbesondere das Ausmaß der erzielten Verbesserung auch für die metallurgischen Fachleute durchaus überraschend war und auf Basis der Kenntnis der unterschiedlichen Eigenschaften zwischen Gußteil und Walzstahlerzeugnis nicht vorherzusehen war.

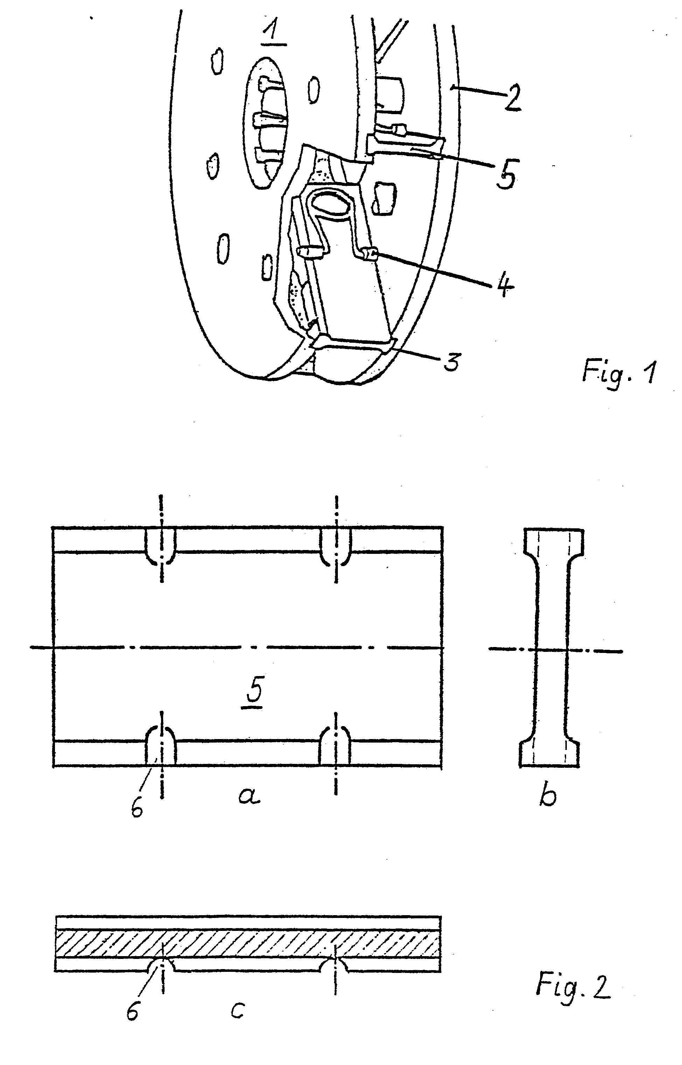

Das erfindungsgemäße Verfahren wird nachfolgend an Hand eines Ausführungsbeispieles in Verbindung mit einigen Figuren näher erläutert. Es zeigen Fig. 1 das Schleuderrad einer Fliehkraft-Strahlvorrichtung (Type "Rotor-Jet" der Firma H. Schlick KG, Reckenfeld, Bundesrepublik Deutschland) in perspektivischer Sicht, wobei durch Aussparung eines bruchstückhaften Abschnittes der einen Scheibe die Sicht auf eine eingebaute Wurfschaufel und deren Feder-Halterung freigegeben ist; die Fig. 2 a bis c zeigen die zugehörige Wurfschaufel in der Draufsicht, im Querschnitt bzw. von der Seite.

Das in Fig. 1 gezeigte Schleuderrad 1 ist durch zwei Schleuderradscheiben 2 gebildet, an deren Innenseite jeweils im gleichen Abstand über seinen Umfang verteilt insgesamt acht einander gegenüberliegende, radiale Führungsnuten 3 angeordnet sind, in welche die aus abgelängtem I-Profilwalzstahl bestehenden Wurfschaufeln 5 eingeschoben und mittels einer Haltefeder 4 in Position gehalten sind.

Zum Zentrum des sich mit etwa 2000 U/min drehenden Schleuderrades 1 wird das jeweils verwendete Strahlmittel, beispielsweise Hartgußkies oder -schrot, durch eine nicht gezeigte Zuführungsvorrichtung kontinuierlich an die Wurfschaufeln 5 herangebracht und durch Zentrifugalkräfte entlang deren Längsachse beschleunigt, um den Behandlungsstrahl für die zu bearbeitenden Werkstücke auszubilden; die Austrittsgeschwindigkeit des Strahlmittels beträgt etwa 80 m/sec.

In den Fig. 2 a bis c ist eine aus einem I-Profilstahl gefertigte Wurfschaufel 5 gezeigt, an deren einer Seite vier halbkreisförmige Haltenuten 6 ausgebildet sind, in welche die in Fig. 1 gezeigten Haltefedern 4 des Schleuderrades eingreifen, um die Schaufeln 5 während des Betriebes der Vorrichtung in Position zu halten.

- 4 -

Die Wurfschaufeln 5 wurden aus erzeugungslangen Walzstangen von etwa 4 m Länge aus dem ledeburitischen Chromstahl X 210 Cr 12 (Werkstoff-Nr. 1.2080) durch Ablängen (Absägen von jeweils 125 mm langen Abschnitten), Einfräsen der Haltenuten und nachfolgende Wärmebehandlung zur Erzielung einer Härte von 63 - 65 $HR_c$ hergestellt.

Während unter analogen Betriebsbedingungen eingesetzte Wurfschaufeln aus Stahlformguß der Zusammensetzung: 3,1 % C, 0,58 % Si, 0,42 % Mn, 15,1 % Cr und 2,6 % Mo bloß eine Standzeit von etwa 180 Betriebsstunden erbrachten, erhöhte sich die Standzeit der erfindungsgemäß aus Walzstahl der Zusammensetzung: 2,05 % C, 0,25 % Si, 0,38 % Mn und 12,2 % Cr hergestellten Schaufeln demgegenüber um mehr als 40 % auf etwa 260 Betriebsstunden.

- 5 -

P a t e n t a n s p r ü c h e :

1. Verfahren zur Herstellung gehärteter Wurfschaufeln für Fliehkraft-Strahlvorrichtungen, dadurch gekennzeichnet, daß ein dem Schaufelprofil nachgebildeter Profilwalzstahl hergestellt, im wesentlichen auf das Schaufelmaß abgelängt, erforderlichenfalls der Halterung dienende Ausnehmungen eingearbeitet und durch eine Wärmebehandlung eine Härteeinstellung auf 60 bis 68 $HR_c$, vorzugsweise 61 bis 66 $HR_c$ vorgenommen wird.

2. Verfahren nach Anspruch 1, dadurch gekennzeichnet, daß als Profilwalzstahl ein ledeburitischer Werkzeugstahl, vorzugsweise ein solcher aus der Reihe der ledeburitischen Chromstähle, verwendet wird.

_1_

2

5

4

3

Fig. 1

_5_

6

a

b

6

c

Fig. 2